# EUROPÄISCHE PATENTSCHRIFT

(11) **EP 1 344 662 B1**
(45) Veröffentlichungstag und Bekanntmachung des Hinweises auf die Patenterteilung: **03.05.2006**
(21) Anmeldenummer: 02100240.7
(22) Anmeldetag: 13.03.2002
(51) Int. Cl.: B60G 21/055, F16C 33/20, F16C 27/06, F16F 1/376, F16F 1/38

(54) **Stabilisatorlager für ein Kraftfahrzeug**
Stabilizer bar bearing for a motor vehicle
Palier pour une barre stabilisatrice d'un véhicule automobile

(43) Veröffentlichungstag der Anmeldung: 17.09.2003
(73) Patentinhaber: Ford Global Technologies, LLC, Dearborn, MI 48126 (US)
(72) Erfinder: Funke, Juergen, 51373 Leverkusen (DE)
(74) Vertreter: Drömer, Hans-Carsten

(56) Entgegenhaltungen:
- EP-A- 0 747 246
- WO-A-91/09748
- WO-A-92/13205
- DE-A- 19 912 268
- FR-A- 2 768 661
- US-A- 3 107 953
- US-A- 4 854 766

## Beschreibung

Stabilisatoren werden im Fahrzeugbau als Federelemente zur Verbesserung der Straßenlage eines Kraftfahrzeuges verwendet. Häufig sind Stabilisatoren dabei als runde Drehstäbe ausgebildet, deren Mittelteil drehbar an der Karosserie angebracht ist, während die Enden über Koppelelemente an den Querlenkern der Räder angelenkt sind. Bei einem Anheben eines Rades (Einfedem) wird über eine Verdrehung des Stabilisators das andere Rad auch angehoben. Dieser Effekt wirkt bei einer Kurvenfahrt einer übermäßigen seitlichen Neigung der Karosserie entgegen.

Die Lagerung eines Stabilisators an der Fahrzeugkarosserie erfolgt in der Regel über eine Gummibüchse oder Gummihülse, welche in einer entsprechenden Aufnahme an der Karosserie befestigt ist. Der Stabilisator tritt bei einem Teil der bekannten Lager frei beweglich durch die Gummihülse hindurch. Daneben sind auch Stabilisatorlager bekannt, bei welchen keine Relativbewegung zwischen Stabilisator und Gummihülse möglich ist, indem z. B. eine Preßpassung zwischen Stabilisator und Gummihülse vorgesehen ist. Diesbezüglich ist es aus der WO 91/09748 A1 bekannt, eine zylindrische Kunststoffhülse in einem Gußverfahren direkt auf dem (metallischen) Stabilisator aufzubringen, so daß diese dort einen festen Sitz erhält. Der nähere Aufbau des Stabilisatorlagers ist in diesem Dokument jedoch nicht beschrieben. Problematisch bei der Preßpassung ist u.a., daß Kriecheffekte auftreten können. Bei einer alternativen Ausgestaltung eines Stabilisatorlagers ist der Stabilisator im Durchtrittsbereich durch die Gummihülse radial verjüngt, so daß dieser durch die Gummihülse axial fixiert wird. Die Verjüngung erhöht jedoch die Spannungen im Stabilisator und verkürzt damit dessen Lebensdauer. Ferner benötigen alle bekannten Konstruktionen noch einen zusätzlichen Kragen seitlich der Gummihülse, um den Stabilisator angesichts der Alterung der Gummihülse und dem Auftreten hoher Stoßbelastungen in Axialrichtung zu fixieren.

Aus DE 199 12 268 A1 ist eine Lagerung für einen Stabilisator in einem Kraftfahrzeug bekannt, wobei auf den Stabilisator eine Lagerhülse aufgespritzt ist, welche in einem Lagerkörper aus Gummi gehalten ist. Ein an die Lagerhülse angeformter Anschlagring dient als Axialsicherung für den Stabilisator. In einer Ausführung ist die Lagerbüchse mit über die Breite der Lagerung verlaufenden Vorsprüngen bzw. Zähnen versehen, die mit einer komplementären Verzahnung im Lagerkörper zusammenwirken.

Aus US 3,107,953 ist eine Laufbuchsen-Anordnung, insbesondere für eine Radaufhängung in einem Kraftfahrzeug, mit einem auf einer inneren Hülse sitzenden Gummikörper bekannt, wobei gemäß einer Ausführung ringförmige Rippen, die jeweils an der Außenseite der Hülse bzw. der Innenseite des Gummikörpers ausgebildet sind, ineinander greifen.

Aufgabe der vorliegenden Erfindung ist es, ein Stabilisatorlager für ein Kraftfahrzeug bereitzustellen, welches in einfacher Weise eine sichere Lagerung des Stabilisators an der Karosserie gewährleistet.

Diese Aufgabe wird durch ein Stabilisatorlager mit den Merkmalen des Anspruchs 1 gelöst. Vorteilhafte Ausgestaltungen sind in den Unteransprüchen enthalten.

Das erfindungsgemäße Stabilisatorlager für ein Kraftfahrzeug besitzt eine am Stabilisator befestigte Kunststoffhülse, welche an ihrer Außenseite eine Struktur aufweist und mit dieser Struktur formschlüssig in einem an der Fahrzeugkarosserie befestigten Gummikörper gelagert ist. Die Struktur enthält an der Außenseite der Kunststoffhülse rasterartig angeordnete Vertiefungen ("Waffelstruktur"), wodurch ein formschlüssiger Eingriff sowohl hinsichtlich axialer Bewegungen als auch hinsichtlich einer Relativdrehung zwischen Kunststoffhülse und Gummikörper besteht, so dass ein maximales Maß an Fixierung des Stabilisators erreicht wird.

Ein derartiges Stabilisatorlager bietet eine gute Kontrolle des Stabilisators, da durch den formschlüssigen Eingriff zwischen Kunststoffhülse und Gummikörper eine Relativbewegung zwischen diesen Elementen quasi ausgeschlossen ist. Die Anbringung eines Kragens seitlich des Gummikörpers erübrigt sich hierdurch.

Der Gummikörper kann dabei insbesondere an der der Kunststoffhülse zugewandten Fläche eine Struktur aufweisen, die komplementär zur Struktur an der Außenseite der Kunststoffhülse ist. Die beiden Strukturen von Kunststoffhülse und Gummikörper können dann nahtlos ineinander greifen und für einen sicheren Sitz des Stabilisators sorgen. Gleichzeitig ist jedoch aufgrund der Elastizität des Gummikörpers gewährleistet, daß sich Kunststoffhülse und Gummikörper während der Montage zusammenstecken lassen.

Die Struktur an der Außenseite der Kunststoffhülse kann auch umlaufende Rillen enthalten.

Die Kunststoffhülse wird vorzugsweise in einem Gußverfahren am Stabilisator angebracht. Hierdurch entsteht eine innige Verbindung zwischen Stabilisator und Kunststoffhülse, die für einen festen Sitz der Kunststoffhülse auf dem Stabilisator sorgt.

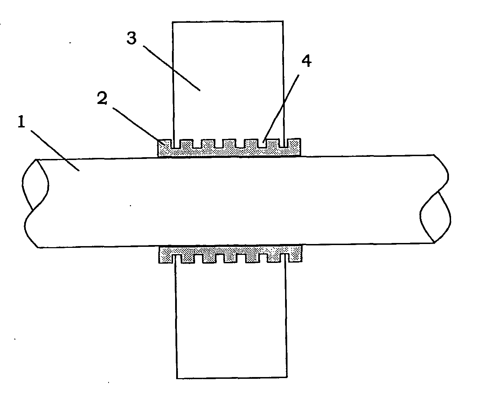

Im Folgenden wird die Erfindung mit Hilfe der beigefügten Figur beispielhaft näher erläutert. Die einzige Figur zeigt einen Schnitt durch ein erfndungsgemäßes Stabilisatorlager.

In der Figur ist ein Ausschnitt aus dem Stabilisator 1 eines Kraftfahrzeuges dargestellt, wobei der Stabilisator in bekannter Weise die an derselben Achse befindlichen Räder des Kraftfahrzeuges miteinander koppelt. Die Lagerung des Stabilisators 1 an der Karosserie des Kraftfahrzeuges geschieht über einen Gummikörper beziehungsweise eine Gummihülse 3, die in nicht näher dargestellter Weise an der Karosserie fixiert ist.

Für die Verbindung zwischen Stabilisator 1 und Gummikörper 3 wird erfindungsgemäß vorgeschlagen, eine Kunststoffhülse 2 auf dem Stabilisator 1 anzubringen, deren Außenseite eine Struktur aufweist. Diese Struktur kommt mit einer komplementären Struktur der Gummihülse 3 zum Eingriff und sorgt somit für eine formschlüssige Verbindung zwischen Kunststoffhülse 2 und Gummihülse 3. Die Struktur an der Außenseite der Kunststoffhülse 2 wird durch irregulär oder regulär (rasterartig) verteilte Vertiefungen 4 gebildet, so daß anschaulich eine Art "Waffelstruktur" entsteht. Bei einer solchen Formgebung ist sichergestellt, daß zwischen der Kunststoffhülse 2 und der Gummihülse 3 ein Formschluß sowohl hinsichtlich axialer Bewegungen als auch in Bezug auf Drehungen um die Stabilisatorachse besteht, und es werden insbesondere auch Seitenkräfte aufgenommen.

Die Anbringung der Kunststoffhülse 2 auf dem (metallischen) Stabilisator 1 erfolgt vorzugsweise in einem Gußverfahren. Hierbei wird eine entsprechende Gußform um den Stabilisator 1 angeordnet und mit einem geeigneten Kunststoffmaterial für die Kunststoffhülse 2 gefüllt. Einzelheiten eines derartigen Verfahrens sowie geeignete Materialien können zum Beispiel der WO 91/09748 A1 entnommen werden. Wichtig ist jedoch, daß die Gußform so ausgestaltet ist, daß die Außenseite der Kunststoffhülse 2 die gewünschte Struktur für eine Verbindung mit der Gummihülse 3 erhält.

## Patentansprüche

1. Stabilisatorlager für ein Kraftfahrzeug, enthaltend eine am Stabilisator (1) befestigte Kunststoffhülse (2), wobei die Kunststoffhülse (2) an ihrer Außenseite eine Struktur aufweist und mit dieser Struktur formschlüssig in einem am Fahrzeug befestigten Gummikörper (3) gelagert ist,
**dadurch gekennzeichnet, daß**
die Struktur der Außenseite der Kunststoffhülse (2) rasterartig angeordnete Vertiefungen (4) enthält, so dass ein Formschluss sowohl hinsichtlich axialer Bewegungen als auch in Bezug auf Drehungen um die Stabilisatorachse besteht.

2. Stabilisatorlager nach Anspruch 1,
**dadurch gekennzeichnet, daß**
der Gummikörper (3) eine zur Struktur der Außenseite der Kunststoffhülse (2) komplementäre Struktur besitzt.

3. Stabilisatortager nach Anspruch 1 oder 2,
**dadurch gekennzeichnet, daß**
die Struktur der Außenseite der Kunststoffhülse (2) umlaufende Rillen enthält.

4. Stabilisatorlager nach mindestens einem der Ansprüche 1 bis 3,
**dadurch gekennzeichnet, daß**
die Kunststoffhülse (2) an den Stabilisator (1) angegossen ist.

## Claims

1. Stabilizer bearing for a motor vehicle, containing a plastic sleeve (2) which is fastened to the stabilizer (1), the plastic sleeve (2) having a structure on its outside and being mounted with this structure in a form-fitting manner in a rubber body (3) fastened to the vehicle, **characterized in that** the structure of the outside of the plastic sleeve (2) contains depressions (4) arranged in a grid-like manner, so that there is a form-fitting engagement both with respect to axial movements and with regard to rotations about the axis of the stabilizer.

2. Stabilizer bearing according to Claim 1,
**characterized in that**
the rubber body (3) has a structure which is complementary to the structure of the outside of the plastic sleeve (2).

3. Stabilizer bearing according to Claim 1 or 2,
**characterized in that**
the structure of the outside of the plastic sleeve (2) contains encircling grooves.

4. Stabilizer bearing according to at least one of Claims 1 to 3,
**characterized in that**
the plastic sleeve (2) is cast integrally on the stabilizer (1).

## Revendications

1. Palier stabilisateur pour un véhicule automobile, contenant une douille en plastique (2) fixée sur le stabilisateur (1), la douille en plastique (2) présentant sur son côté extérieur une structure et étant montée avec cette structure par engagement positif dans un corps en caoutchouc (3) fixé sur le véhicule,
**caractérisé en ce que**
la structure du côté extérieur de la douille en plastique (2) contient des renfoncements (4) disposés en forme de matrice, de sorte qu'un engagement positif existe en termes de mouvements axiaux ainsi qu'en termes de rotations autour de l'axe du stabilisateur.

2. Palier stabilisateur selon la revendication 1,
**caractérisé en ce que**
le corps en caoutchouc (3) possède une structure complémentaire de la structure du côté extérieur de la douille en plastique (2).

3. Palier stabilisateur selon la revendication 1 ou 2,
**caractérisé en ce que**
la structure du côté extérieur de la douille en plastique (2) contient des rainures périphériques.

4. Palier stabilisateur selon au moins l'une quelconque des revendications 1 à 3,
**caractérisé en ce que**
la douille en plastique (2) est moulée sur le stabilisateur (1).
